# DEMANDE DE BREVET EUROPEEN

(11) **EP 1 731 358 A2**
(43) Date de publication de la demande: **13.12.2006**
(21) Numéro de dépôt: 06300553.2
(22) Date de dépôt: 02.06.2006
(51) Int. Cl.: B60N 2/42

(54) **Dispositif anti-sousmarinage pour un siège de véhicule automobile**

(30) Priorité: 06.06.2005 FR 0505723
(71) Demandeur: Peugeot Citroen Automobiles SA, 78140 Vélizy-Villacoublay (FR)
(72) Inventeur: Combeau, Frédéric, 25750 Desandans (FR)
(74) Mandataire: Fernandez, Francis Lionel

(57) **Abrégé**

L'invention concerne un dispositif anti-sousmarinage (10) pour un siège (2) de véhicule automobile, ledit siège (2) comprenant une assise (3) et un dossier (4) déplaçables entre une position d'utilisation et une position escamotée au moyen de deux pieds avant (7) montés articulés sur un plancher (6). Chaque pied (7) comporte un ergot (11) s'étendant perpendiculairement à l'axe longitudinal du véhicule et destiné à venir s'emboîter, en position d'utilisation du siège (2), dans un logement (13) ménagé dans un élément de blocage (12) solidaire du plancher (6).

L'invention concerne également un véhicule automobile comportant au moins un siège escamotable équipé d'un tel dispositif anti-sousmarinage.

## Description

La présente invention concerne un dispositif anti-sousmarinage pour un siège escamotable de véhicule automobile, ainsi qu'un véhicule automobile comportant au moins un siège escamotable équipé d'un tel dispositif anti-sousmarinage.

Le sousmarinage est un phénomène qui se produit lors de certains chocs frontaux et qui consiste, pour l'occupant d'un siège, à s'enfoncer dans le siège et à glisser vers l'avant en passant sous la partie ventrale de la ceinture de sécurité, ce qui en diminue son efficacité.

Afin de limiter ce phénomène, on équipe les sièges de véhicule automobile d'un dispositif dit d'anti-sousmarinage.

Les dispositifs anti-sousmarinages connus jusqu'à présent sont de différents types.

On connaît par exemple un dispositif anti-sousmarinage formé par un tube soudé sur l'armature de l'assise du siège et placé sous les cuisses de l'occupant et qui, au moment du choc, l'empêche de descendre et de s'enfoncer dans le siège. Ce tube est retenu en position par des moyens susceptibles d'absorber le choc en se déformant. En cas de choc, sous l'effet de l'inertie, le corps du passager appuie sur ce tube d'anti-sousmarinage et le fait basculer vers l'avant en entraînant les moyens d'absorption d'énergie.

Un tel dispositif présente l'inconvénient qui réside dans le fait qu'il est difficile de trouver une position et une forme correcte pour le tube, de façon à le rendre efficace. De plus, du fait que la matelassure du coussin de l'assise du siège sous les cuisses de l'occupant repose sur le tube, cela peut provoquer une gêne et nuire à son confort.

On connaît également un autre dispositif anti-sousmarinage qui est constitué par une tôle fixée sur l'armature de l'assise du siège et qui a son extrémité avant inclinée et remontant vers le haut pour que les cuisses de l'occupant reposent et soient soutenues sur la partie inclinée de la tôle.

Un tel dispositif présente les mêmes inconvénients que le tube et, de plus, pour être efficace, la tôle doit venir assez loin vers l'arrière du siège, ce qui en diminue le confort.

Par ailleurs, ce genre de dispositif anti-sousmarinage est difficilement compatible avec un siège déplaçable entre une position d'utilisation et une position escamotée dans le plancher du véhicule automobile.

L'invention a pour but de proposer un dispositif anti-sousmarinage qui remédie aux inconvénients précédemment mentionnés et qui est applicable plus particulièrement aux sièges escamotables des véhicules automobiles.

L'invention a donc pour objet un dispositif anti-sousmarinage pour un siège de véhicule automobile, ledit siège comprenant une assise et un dossier déplaçables entre une position d'utilisation et une position escamotée au moyen notamment de deux pieds avant montés articulés sur un plancher du véhicule, caractérisé en ce que chaque pied comporte un ergot s'étendant perpendiculairement à l'axe longitudinal du véhicule et destiné à s'emboîter, en position d'utilisation du siège, dans un logement ménagé dans un élément de blocage solidaire du plancher pour retenir le siège en cas de choc frontal et selon une direction perpendiculaire audit plancher.

Selon d'autres caractéristiques de l'invention :
- les ergots sont reliés entre eux par une barre transversale,
- chaque élément de blocage est formé par une plaque s'étendant perpendiculairement au plancher et parallèlement à l'axe longitudinal du véhicule, ladite plaque étant munie sur son bord arrière dudit logement,
- la plaque comporte, sur son bord inférieur, un rebord d'appui et de fixation sur le plancher,
- la plaque comporte, sur son bord supérieur, au moins une patte horizontale d'appui d'un élément de recouvrement du plancher du véhicule, et
- la plaque comporte, sur son bord supérieur, une première patte horizontale d'appui d'un élément de recouvrement du plancher du véhicule, situé devant le siège, et une seconde patte horizontale d'appui d'un élément de recouvrement du plancher, situé au-dessous dudit siège.

L'invention a également pour objet un véhicule automobile, caractérisé en ce qu'il comporte au moins un siège escamotable équipé d'un dispositif anti-sousmarinage tel que précédemment mentionné.

D'autres caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'une rangée de sièges arrière escamotables et équipés chacun d'un dispositif anti-sousmarinage, conforme à l'invention,
- la Fig. 2 est une vue en perspective et à plus grande échelle d'un élément de blocage du dispositif anti-sousmarinage, conforme à l'invention, et
- les Figs. 3 et 4 sont des vues schématiques en perspective montrant le positionnement d'éléments de recouvrement du plancher du véhicule sur les éléments de blocage du dispositif anti-sousmarinage, conforme à l'invention.

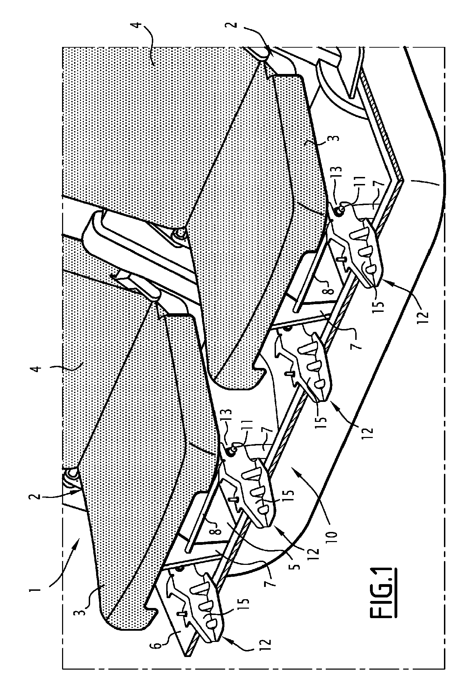

Sur la Fig. 1, on a représenté schématiquement une rangée 1 de sièges arrière 2 d'un véhicule automobile. Chaque siège 2 se compose, de manière classique, d'une assise 3 et d'un dossier 4.

Dans l'exemple de réalisation représenté sur la Fig. 1, chaque siiège 2 est escamotable et, pour cela, l'assise 3 et le dossier 4 sont déplaçables entre une position d'utilisation et une position escamotée dans un logement 5 ménagé dans un plancher 6 du véhicule automobile.

A cet effet, l'assise 3 de chaque siège 2 comporte deux pieds avant 7 montés articulés sur le plancher 6.

Chaque siège 2 est équipé d'un dispositif anti-sousmarinage désigné par la référence générale 10 et qui permet de retenir le siège 2 en cas de choc avant du véhicule afin d'éviter que l'occupant s'enfonce dans l'assise 3 du siège 2 et également de retenir le siège afin d'éviter toute dégradation dudit siège en cas de choc arrière à basse vitesse.

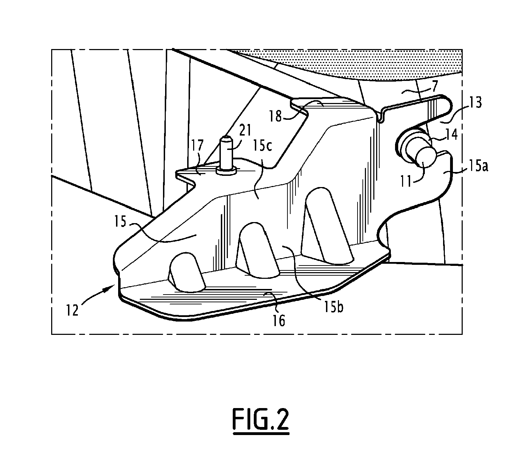

Ainsi que montré sur les Figs. 1 et 2, le dispositif anti-sousmarinage de chaque siège 2 comprend, au niveau de chaque pied avant 7, un ergot 11 s'étendant perpendiculairement à l'axe longitudinal du véhicule.

Le dispositif anti-sousmarinage comprend également deux éléments de blocage 12 solidaires du plancher 6 et comportant chacun un logement 13 d'emboîtement d'un ergot 11 dans la position d'utilisation du siège 2, comme montré à la Fig. 1.

Les ergots 11 des deux pieds avant 7 sont reliés entre eux par une barre transversale 8 et chaque ergot 11 est pourvu d'une bague anti-bruit 14 en matériau approprié, comme par exemple en caoutchouc.

Comme montré à plus grande échelle à la Fig. 2, chaque élément de blocage 12 est formé par une plaque 15 s'étendant perpendiculairement au plancher 6 et parallèlement à l'axe longitudinal du véhicule automobile et qui comporte sur son bord arrière 15a? le logement 13 de réception de l'ergot 11 correspondant. Cette plaque 15 comporte, sur son bord inférieur 15b, un rebord 16 d'appui et de fixation sur le plancher 6. Enfin, la plaque 15 de chaque élément de blocage 12 comporte, sur son bord supérieur 15c, au moins une patte horizontale d'appui d'un élément de recouvrement du plancher 6 du véhicule automobile.

Dans l'exemple de réalisation représenté sur les Figs. 1 et 2, le bord supérieur 15c de chaque plaque 15 comporte deux pattes horizontales, respectivement 17 et 18.

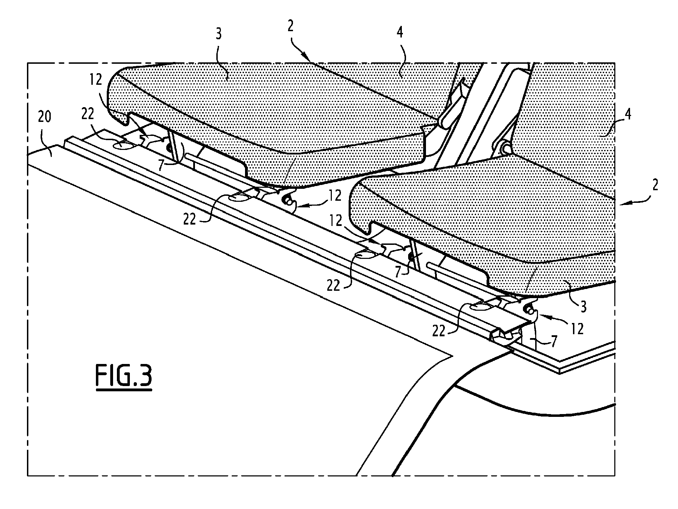

Comme cela apparaît sur les Figs. 2 et 3, la première patte 17 de l'ensemble des plaques 15 forme un appui pour un élément de recouvrement du plancher 6 du véhicule, situé devant la rangée 1 des sièges 2, comme par exemple un tapis de sol 20. A cet effet, chaque première patte 17 comporte un pion 21 (Fig. 2) de fixation d'un organe d'encliquetage 22 (Fig. 3) porté par le tapis de sol 20.

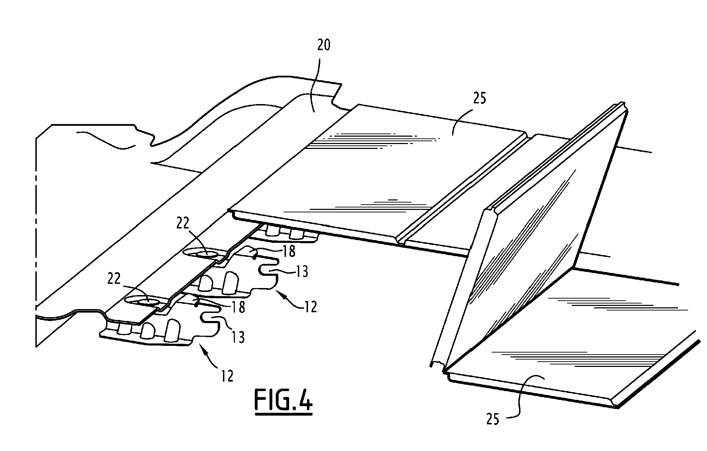

Comme montré à la Fig. 4, la seconde patte 18 de chaque plaque 15 forme un appui pour un élément de recouvrement du logement 5 ménagé dans le plancher 6, comme par exemple un faux plancher 25 qui permet de recouvrir chaque siège 2 dans la position escamotée dans le logement 5.

Les éléments de blocage 12 formés chacun par une plaque 15 permettent de retenir le siège correspondant dans le cas d'un choc avant du véhicule automobile afin d'éviter le sousmarinage de l'occupant de ce siège et également de retenir le siège afin d'éviter sa dégradation dans le cas d'un choc arrière à basse vitesse.

Enfin, le dispositif anti-sousmarinage selon l'invention permet d'alléger la structure du siège du fait que les efforts transitent par l'intermédiaire des éléments de blocage dans la structure du véhicule automobile. Il permet également, de part sa géométrie, de pouvoir fixer d'autres éléments.

## Revendications

1. Dispositif anti-sousmarinage pour un siège (2) de véhicule automobile, ledit siège (2) comprenant une assise (3) et un dossier (4) déplaçables entre une position d'utilisation et une position escamotée au moyen notamment de deux pieds avant (7) montés articulés sur un plancher (6) du véhicule, **caractérisé en ce que** chaque pied (7) comporte un ergot (11) s'étendant perpendiculairement à l'axe longitudinal du véhicule et destiné à s'emboîter, en position d'utilisation du siège (2), dans un logement (13) ménagé dans un élément de blocage (12) solidaire du plancher (6) pour retenir le siège (2) en cas de choc frontal et selon une direction perpendiculaire audit plancher (6).

2. Dispositif selon la revendication 1, **caractérisé en ce que** les ergots (11) sont reliés entre eux par une barre transversale (8).

3. Dispositif selon la revendication 1 ou 2, **caractérisé en ce que** chaque élément de blocage (12) est formé par une plaque (15) s'étendant perpendiculairement au plancher (6) et parallèlement à l'axe longitudinal du véhicule, ladite plaque (15) étant munie, sur son bord arrière (15a), dudit logement (13).

4. Dispositif selon la revendication 3, **caractérisé en ce que** la plaque (15) comporte, sur son bord inférieur (15b), un rebord (16) d'appui et de fixation sur la plancher (6).

5. Dispositif selon la revendication 3 ou 4, **caractérisé en ce que** la plaque (15) comporte, sur son bord supérieur (15c), au moins un patte (17, 18) horizontale d'appui d'un élément (20, 25) de recouvrement du plancher (6) du véhicule.

6. Dispositif selon la revendication 3 ou 4, **caractérisé en ce que** la plaque (15) comporte, sur son bord supérieur (15c), une première patte (17) horizontale d'appui d'un élément (20) de recouvrement du plancher (6) du véhicule, situé devant le siège (2), et une seconde patte (18) horizontale d'appui d'un élément (25) de recouvrement du plancher (6), situé au-dessous du siège (2).

7. Véhicule automobile, **caractérisé en ce qu'**il comporte au moins un siège escamotable (2) équipé d'un dispositif anti-sousmarinage (10) selon l'une quelconque des revendications 1 à 6.
